(19) Europäisches Patentamt
European Patent Office
Office européen des brevets

(11) **EP 4 657 934 A1**

(12) **EUROPEAN PATENT APPLICATION**
published in accordance with Art. 153(4) EPC

(43) Date of publication:
**03.12.2025 Bulletin 2025/49**

(21) Application number: **24785380.7**

(22) Date of filing: **08.04.2024**

(51) International Patent Classification (IPC):
**H04W 56/00** (2009.01)    **H04W 72/1268** (2023.01)
**H04W 72/0446** (2023.01)    **H04L 5/00** (2006.01)
**H04W 84/06** (2009.01)

(52) Cooperative Patent Classification (CPC):
**H04L 5/00; H04W 56/00; H04W 72/04;**
**H04W 72/0446; H04W 72/12; H04W 72/1268;**
**H04W 72/232; H04W 84/06**

(86) International application number:
**PCT/KR2024/004669**

(87) International publication number:
**WO 2024/210690 (10.10.2024 Gazette 2024/41)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **07.04.2023 KR 20230046384**

(71) Applicants:
• **Hyundai Motor Company**
  **Seoul 06797 (KR)**
• **Kia Corporation**
  **Seoul 06797 (KR)**

(72) Inventors:
• **SUH, Young Kil**
  **Hwaseong-si, Gyeonggi-do 18280 (KR)**
• **HAHN, Gene Back**
  **Hwaseong-si, Gyeonggi-do 18280 (KR)**
• **HONG, Ui Hyun**
  **Hwaseong-si, Gyeonggi-do 18280 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND DEVICE FOR TIMING ADJUSTMENT IN NON-TERRESTRIAL NETWORK**

(57)    A method and a device for timing adjustment in a non-terrestrial network are disclosed. This method of a user equipment (UE) may comprise the steps of: receiving a downlink (DL) signal from a base station; acquiring an adjustment parameter which is included in the downlink signal and is set by the base station for TA control; determining whether a difference value acquired using TA information of the UE is within the adjustment parameter range, so as to determine a start point of a TA adjustment procedure; performing the TA adjustment procedure at the start point of the TA adjustment procedure; and using the adjusted TA so as to transmit a bundled reference signal to the base station.

EP 4 657 934 A1

【FIG. 8】

**Description**

[Technical Field]

The present disclosure relates to a timing adjustment technique in a non-terrestrial network, and more particularly, to a technique of adjusting a timing for a terminal to perform reference signal bundling.

[Background Art]

The reliability of uplink data transmission of a terminal can be improved through repeated transmissions. In addition, the channel estimation performance of uplink reference signals can be improved through a bundling scheme for the reference signals. The bundling of reference signals and repeated transmissions can improve the transmission efficiency of the terminal. When the terminal performs repeated transmission of one transport block (TB), the terminal can transmit the transport block across multiple uplink slots. Demodulation reference signals (DMRSs) for all the slots used in the transmission may not be bundled. The terminal can perform bundling for the reference signals with respect to one transport block in one or more bundles. Each bundle may be defined as a time domain window (TDW). A boundary that divides the time domain windows may be determined based on at least one of a nominal TDW, a time domain allocation structure of an uplink channel, or an actual TDW. The nominal TDW may refer to a time domain window having a default value configured by a base station. The actual TDW may refer to a time domain window having a value determined by occurrence of various types of events. The event may include a timing advance (TA) adjustment procedure. When the TA adjustment procedure is performed, consistency of a transmission power of a transmission signal may be disrupted in the process of adjusting a TA. When the TA adjustment procedure is performed, continuity of the transmission power of the transmission signal may be disrupted in the process of adjusting a TA. Since consistency and continuity of the transmission power of the transmission signal may be disrupted in the TA adjustment procedure, the terminal may not perform the TA adjustment procedure in the actual TDW.

[Disclosure]

[Technical Problem]

The present disclosure is directed to providing a method and an apparatus for timing adjustment in a non-terrestrial network.

[Technical Solution]

A method of a user equipment (UE), according to exemplary embodiments of the present disclosure for achieving the above-described objective, may comprise: receiving a downlink (DL) signal from a base station; obtaining an adjustment parameter for timing advance (TA) control, which is included in the downlink signal; determining a start time of a TA adjustment procedure by determining whether a difference value obtained using TA information of the UE is within a range of the adjustment parameter; performing the TA adjustment procedure at the start time of the TA adjustment procedure; and transmitting bundled reference signals to the base station using the adjusted TA.

The start time of the TA adjustment procedure may include at least one of: a start time of each slot in which a Physical Uplink Shared Channel (PUSCH) is transmitted, a first Demodulation Reference Signal (DMRS) symbol of each slot, or a middle symbol of each slot.

The determining of the start time of the TA adjustment procedure by determining whether the difference value obtained using the TA information of the UE is within the range of the adjustment parameter may comprise: determining whether a difference between a reception timing of an uplink signal at the base station and a reference timing of the uplink signal at the base station is within the range of the adjustment parameter set by the base station, based on the TA information; and determining the start time of the TA adjustment procedure based on whether the difference is within the range.

The performing of the TA adjustment procedure at the start time of the TA adjustment procedure may comprise: adjusting the difference value so that a difference value between a reception timing of an uplink signal at the base station and a reference timing of the uplink signal at the base station is included within the range of the adjustment parameter at the start time of the TA adjustment procedure.

The method may further comprise: transmitting information on the start time of the TA adjustment procedure for the TA adjustment procedure to the base station.

The adjustment parameter may include at least one of: a parameter for determining whether the UE performs the TA adjustment procedure, $T_0$, which is a value set in advance by the base station, $T_1$, which is a value set in advance by the base station, or information on a port to which the UE is to hop.

The adjustment parameter may include a parameter that determines whether to initiate the TA adjustment procedure when the bundled reference signals are configured.

The downlink signal may be transmitted through Downlink Control Information (DCI) or Radio Resource Control (RRC) signaling.

A method of a base station, according to exemplary embodiments of the present disclosure for achieving the above-described objective, may comprise: transmitting a downlink (DL) signal including an adjustment parameter set by the base station for timing advance (TA) control to a user equipment (UE); and receiving bundled reference signals from the UE using a TA adjusted within a range of the adjustment parameter at a start time of a TA adjustment procedure, the start time being determined by determining whether a difference value obtained using TA information of the UE is within the range of the adjustment parameter.

The method may further comprise: receiving information on the start time of the TA adjustment procedure for the TA adjustment procedure from the UE.

The adjustment parameter may include a parameter that determines whether to initiate the TA adjustment procedure when the bundled reference signals are configured.

The downlink signal may be transmitted through Downlink Control Information (DCI) or Radio Resource Control (RRC) signaling.

A user equipment (UE), according to exemplary embodiments of the present disclosure for achieving the above-described objective, may comprise at least one processor, wherein the at least one processor may cause the UE to perform: receiving a downlink (DL) signal from a base station; obtaining an adjustment parameter for timing advance (TA) control, which is included in the downlink signal; determining a start time of a TA adjustment procedure by determining whether a difference value obtained using TA information of the UE is within a range of the adjustment parameter; performing the TA adjustment procedure at the start time of the TA adjustment procedure; and transmitting bundled reference signals to the base station using the adjusted TA.

The start time of the TA adjustment procedure may include at least one of: a start time of each slot in which a Physical Uplink Shared Channel (PUSCH) is transmitted, a first Demodulation Reference Signal (DMRS) symbol of each slot, or a middle symbol of each slot.

In the determining of the start time of the TA adjustment procedure by determining whether the difference value obtained using the TA information of the UE is within the range of the adjustment parameter, the at least one processor may further cause the UE to perform: determining whether a difference between a reception timing of an uplink signal at the base station and a reference timing of the uplink signal at the base station is within the range of the adjustment parameter set by the base station, based on the TA information; and determining the start time of the TA adjustment procedure based on whether the difference is within the range.

In the performing of the TA adjustment procedure at the start time of the TA adjustment procedure, the at least one processor may further cause the UE to perform: adjusting the difference value so that a difference value between a reception timing of an uplink signal at the base station and a reference timing of the uplink signal at the base station is included within the range of the adjustment parameter at the start time of the TA adjustment procedure.

The at least one processor may further cause the UE to perform: transmitting information on the start time of the TA adjustment procedure for the TA adjustment procedure to the base station.

The adjustment parameter may include at least one of: a parameter for determining whether the UE performs the TA adjustment procedure, $T_0$, which is a value set in advance by the base station, $T_1$, which is a value set in advance by the base station, or information on a port to which the UE is to hop.

The adjustment parameter may include a parameter that determines whether to initiate the TA adjustment procedure when the bundled reference signals are configured.

The downlink signal may be transmitted through Downlink Control Information (DCI) or Radio Resource Control (RRC) signaling.

[Advantageous Effects]

According to the present disclosure, the terminal can actively perform a Timing Advance (TA) adjustment procedure to control a TA. The TA adjustment procedure actively performed by the terminal can notify a base station, which is a receiving end, of a TA adjustment timing. The TA adjustment timing may be transmitted through additional signaling by the terminal. Through such additional signaling, the terminal can perform the active TA adjustment procedure. The terminal can configure a time domain window of an appropriate size through the TA adjustment procedure. The terminal can improve channel estimation performance resulting from bundling of reference signals through the appropriate time domain window.

[Description of Drawings]

FIG. 1A is a conceptual diagram illustrating exemplary embodiments of a non-terrestrial network.
FIG. 1B is a conceptual diagram illustrating exemplary embodiments of a non-terrestrial network.
FIG. 2A is a conceptual diagram illustrating exemplary embodiments of a non-terrestrial network.
FIG. 2B is a conceptual diagram illustrating exemplary embodiments of a non-terrestrial network.
FIG. 2C is a conceptual diagram illustrating exemplary embodiments of a non-terrestrial network.
FIG. 3 is a block diagram illustrating exemplary embodiments of a communication node constituting a non-terrestrial network.
FIG. 4 is a block diagram illustrating exemplary embodiments of communication nodes performing communication.
FIG. 5A is a block diagram illustrating exemplary embodiments of a transmission path.
FIG. 5B is a block diagram illustrating exemplary embodiments of a reception path.
FIG. 6A is a conceptual diagram illustrating exemplary embodiments of a protocol stack of a user plane in a transparent payload-based non-terrestrial network.
FIG. 6B is a conceptual diagram illustrating exemplary embodiments of a protocol stack of a control plane in a transparent payload-based non-terrestrial network.
FIG. 7A is a conceptual diagram illustrating exemplary embodiments of a protocol stack of a user plane in a regenerative payload-based non-terrestrial network.
FIG. 7B is a conceptual diagram illustrating exemplary embodiments of a protocol stack of a control plane in a regenerative payload-based non-terrestrial network.
FIG. 8 is a conceptual diagram illustrating exemplary embodiments of an active TA adjustment method.
FIG. 9 is a conceptual diagram illustrating exemplary embodiments of an active TA adjustment method.

[Best mode of the Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the present disclosure. As used herein, the singular forms are intended to include the plural forms as well, unless the context clearly indicates otherwise. It will be further understood that the terms "comprise" and/or "include" when used herein, specify the presence of stated features, integers, steps, operations, elements, components or combinations thereof, but do not preclude the presence or addition of one or more other features, integers, steps, operations, elements, components, and/or combinations thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted. In addition to the exemplary embodiments explicitly described in the present disclosure, operations may be performed according to a combination of the exemplary embodiments, extensions of the exemplary embodiments, and/or modifications of the exemplary embodiments. Performance of some operations may be omitted, and the order of performance of operations may be changed.

Even when a method (e.g. transmission or reception of a signal) performed at a first communication node among communication nodes is described, a corresponding second communication node may perform a method (e.g. reception or transmission of the signal) corresponding to the method performed at the first communication node. That is, when an operation of a user equipment (UE) is described, a base station corresponding to the UE may perform an operation corresponding to the operation of the UE. Conversely, when an operation of a base station is described, a UE corresponding to the base station may perform an operation corresponding to the operation of the base station. In a non-terrestrial network (NTN) (e.g. payload-based NTN), operations of a base station may refer to operations of a satellite, and operations of a satellite may refer to operations of a base station.

The base station may refer to a NodeB, evolved NodeB (eNodeB), next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and/or the like. The UE may refer to a terminal, device, apparatus, node, communication node, end node, access terminal, mobile terminal, station, subscriber station, mobile station, portable subscriber station, on-broad unit (OBU), and/or the like.

In the present disclosure, signaling may be at least one of higher layer signaling, medium access control (MAC) signaling, or physical (PHY) signaling. Messages used for higher layer signaling may be referred to as 'higher layer messages' or 'higher layer signaling messages'. Messages used for MAC signaling may be referred to as 'MAC messages' or 'MAC signaling messages'. Messages used for PHY signaling may be referred to as 'PHY messages' or 'PHY signaling messages'. The higher layer signaling may refer to a transmission and reception operation of system information (e.g. master information block (MIB), system information block (SIB)) and/or RRC messages. The MAC signaling may refer to a transmission and reception operation of a MAC control element (CE). The PHY signaling may refer to a transmission and reception operation of control information (e.g. downlink control information (DCI), uplink control information (UCI), and sidelink control information (SCI)).

In the present disclosure, "an operation (e.g. transmission operation) is configured" may mean that "configuration information (e.g. information element(s) or parameter(s)) for the operation and/or information indicating to perform the operation is signaled". "Information element(s) (e.g. parameter(s)) are configured" may mean that "corresponding information element(s) are signaled". In the present disclosure, "signal and/or channel" may mean a signal, a channel, or "signal and channel," and "signal" may be used to mean "signal and/or channel".

A communication system may include at least one of a terrestrial network, non-terrestrial network, 4G communication network (e.g. long-term evolution (LTE) communication network), 5G communication network (e.g. new radio (NR) communication network), or 6G communication network. Each of the 4G communications network, 5G communications network, and 6G communications network may include a terrestrial network and/or a non-terrestrial network. The non-terrestrial network may operate based on at least one communication technology among the LTE communication technology, 5G communication technology, or 6G communication technology. The non-terrestrial network may provide communication services in various frequency bands.

The communication network to which exemplary embodiments are applied is not limited to the content described below, and the exemplary embodiments may be applied to various communication networks (e.g. 4G communication network, 5G communication network, and/or 6G communication network). Here, a communication network may be used in the same sense as a communication system.

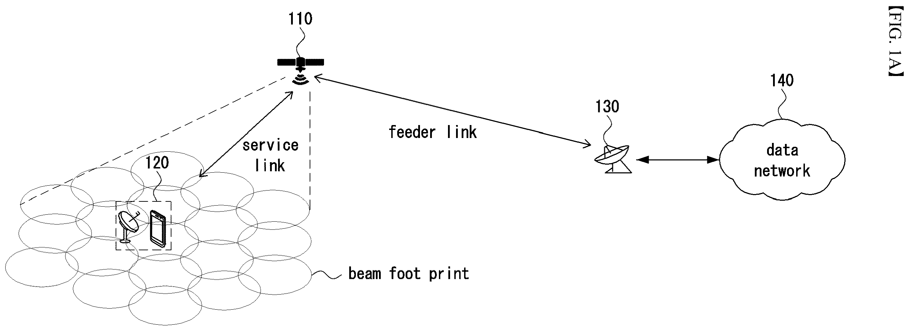

FIG. 1A is a conceptual diagram illustrating exemplary embodiments of a non-terrestrial network.

As shown in FIG. 1A, a non-terrestrial network (NTN) may include a satellite 110, a communication node 120, a gateway 130, a data network 140, and the like. A unit including the satellite 110 and the gateway 130 may correspond to a remote radio unit (RRU). The NTN shown in FIG. 1A may be an NTN based on a transparent payload. The satellite 110 may be a low earth orbit (LEO) satellite, a medium earth orbit (MEO) satellite, a geostationary earth orbit (GEO) satellite, a high elliptical orbit (HEO) satellite, or an unmanned aircraft system (UAS) platform. The UAS platform may include a high altitude platform station (HAPS). A non-GEO satellite may be an LEO satellite and/or MEO satellite.

The communication node 120 may include a communication node (e.g. a user equipment (UE) or a terminal) located on a terrestrial site and a communication node (e.g. an airplane, a drone) located on a non-terrestrial space. A service link may be established between the satellite 110 and the communication node 120, and the service link may be a radio link. The satellite 110 may provide communication services to the communication node 120 using one or more beams. The shape of a footprint of the beam of the satellite 110 may be elliptical or circular.

In the non-terrestrial network, three types of service links can be supported as follows.

- earth-fixed: a service link may be provided by beam(s) that continuously cover the same geographic area at all times (e.g. geosynchronous orbit (GSO) satellite).
- quasi-earth-fixed: a service link may be provided by beam(s) covering one geographical area during a limited period and provided by beam(s) covering another geographical area during another period (e.g. non-GSO (NGSO) satellite forming steerable beams).
- earth-moving: a service link may be provided by beam(s) moving over the Earth's surface (e.g. NGSO satellite forming fixed beams or non-steerable beams).

The communication node 120 may perform communications (e.g. downlink communication and uplink communication) with the satellite 110 using 4G communication technology, 5G communication technology, and/or 6G communication technology. The communications between the satellite 110 and the communication node 120 may be performed using an NR-Uu interface and/or 6G-Uu interface. When dual connectivity (DC) is supported, the communication node 120 may be connected to other base stations (e.g. base stations supporting 4G, 5G, and/or 6G functionality) as well as the satellite 110, and perform DC operations based on the techniques defined in 4G, 5G, and/or 6G technical specifications.

The gateway 130 may be located on a terrestrial site, and a feeder link may be established between the satellite 110 and the gateway 130. The feeder link may be a radio link. The gateway 130 may be referred to as a 'non-terrestrial network (NTN) gateway'. The communications between the satellite 110 and the gateway 130 may be performed based on an NR-Uu interface, a 6G-Uu interface, or a satellite radio interface (SRI). The gateway 130 may be connected to the data network 140. There may be a 'core network' between the gateway 130 and the data network 140. For example, the gateway 130 may be connected to the core network, and the core network may be connected to the data network 140. The core network may support the 4G communication technology, 5G communication technology, and/or 6G communication technology. For example, the core network may include an access and mobility management function (AMF), a user plane function (UPF), a session management function (SMF), and the like. The communications between the gateway 130 and the core network may be performed based on an NG-C/U interface or 6G-C/U interface.

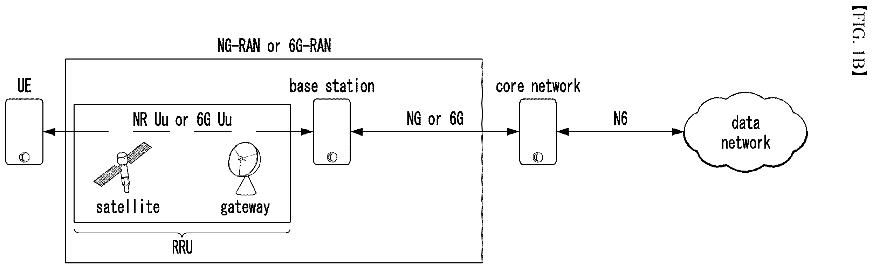

As shown in an exemplary embodiment of FIG. 1B, there may be a 'core network' between the gateway 130 and the data network 140 in a transparent payload-based NTN.

FIG. 1B is a conceptual diagram illustrating exemplary embodiments of a non-terrestrial network.

As shown in FIG. 1B, the gateway may be connected with the base station, the base station may be connected with the core network, and the core network may be connected with the data network. Each of the base station and core network may support the 4G communication technology, 5G communication technology, and/or 6G communication technology. The communications between the gateway and the base station may be performed based on an NR-Uu interface or 6G-Uu interface, and the communications between the base station and the core network (e.g. AMF, UPF, SMF, and the like) may be performed based on an NG-C/U interface or 6G-C/U interface.

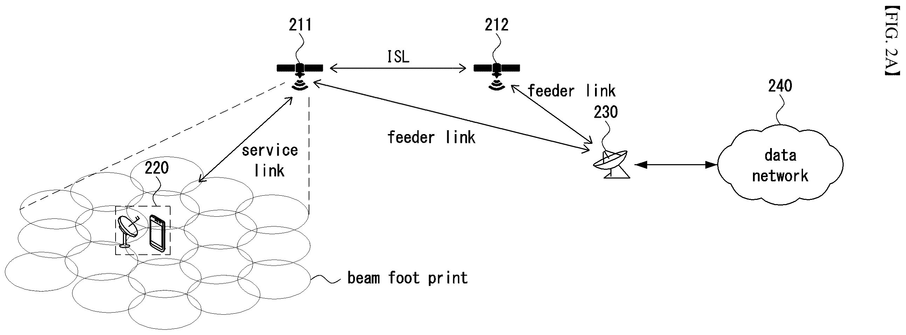

FIG. 2A is a conceptual diagram illustrating exemplary embodiments of a non-terrestrial network.

As shown in FIG. 2A, a non-terrestrial network may include a first satellite 211, a second satellite 212, a communication node 220, a gateway 230, a data network 240, and the like. The NTN shown in FIG. 2A may be a regenerative payload based NTN. For example, each of the satellites 211 and 212 may perform a regenerative operation (e.g. demodulation, decoding, re-encoding, re-modulation, and/or filtering operation) on a payload received from other entities (e.g. the communication node 220 or the gateway 230), and transmit the regenerated payload.

Each of the satellites 211 and 212 may be a LEO satellite, a MEO satellite, a GEO satellite, a HEO satellite, or a UAS platform. The UAS platform may include a HAPS. The satellite 211 may be connected to the satellite 212, and an inter-satellite link (ISL) may be established between the satellite 211 and the satellite 212. The ISL may operate in an RF frequency band or an optical band. The ISL may be established optionally. The communication node 220 may include a terrestrial communication node (e.g. UE or terminal) and a non-terrestrial communication node (e.g. airplane or drone). A service link (e.g. radio link) may be established between the satellite 211 and communication node 220. The satellite 211 may provide communication services to the communication node 220 using one or more beams.

The communication node 220 may perform communications (e.g. downlink communication or uplink communication) with the satellite 211 using the 4G communication technology, 5G communication technology, and/or 6G communication technology. The communications between the satellite 211 and the communication node 220 may be performed using an NR-Uu interface or 6G-Uu interface. When DC is supported, the communication node 220 may be connected to other base stations (e.g. base stations supporting 4G, 5G, and/or 6G functionality) as well as the satellite 211, and may perform DC operations based on the techniques defined in 4G, 5G, and/or 6G technical specifications.

The gateway 230 may be located on a terrestrial site, a feeder link may be established between the satellite 211 and the gateway 230, and a feeder link may be established between the satellite 212 and the gateway 230. The feeder link may be a radio link. When the ISL is not established between the satellite 211 and the satellite 212, the feeder link between the satellite 211 and the gateway 230 may be established mandatorily. The communications between each of the satellites 211 and 212 and the gateway 230 may be performed based on an NR-Uu interface, a 6G-Uu interface, or an SRI. The gateway 230 may be connected to the data network 240.

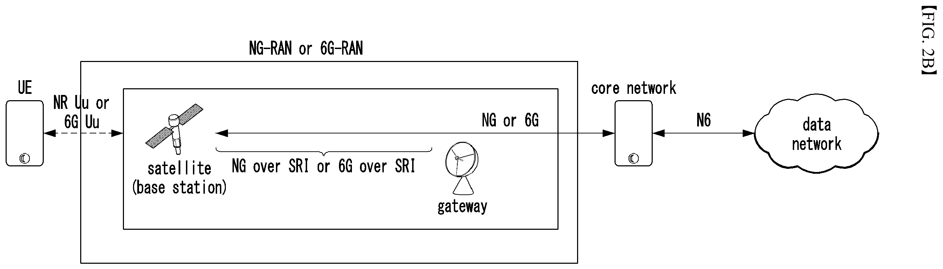

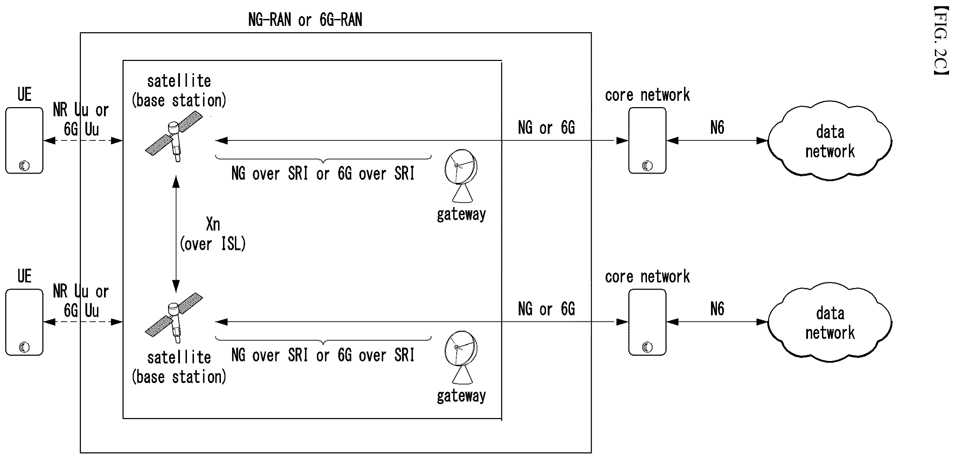

As shown in exemplary embodiments of FIG. 2B and FIG. 2C, there may be a 'core network' between the gateway 230 and the data network 240.

FIG. 2B is a conceptual diagram illustrating exemplary embodiments of a non-terrestrial network, and FIG. 2C is a conceptual diagram illustrating exemplary embodiments of a non-terrestrial network.

As shown in FIG. 2B and FIG. 2C, the gateway may be connected with the core network, and the core network may be connected with the data network. The core network may support the 4G communication technology, 5G communication technology, and/or 6G communication technology. For example. The core network may include AMF, UPF, SMF, and the like. Communication between the gateway and the core network may be performed based on an NG-C/U interface or 6G-C/U interface. Functions of a base station may be performed by the satellite. That is, the base station may be located on the satellite. A payload may be processed by the base station located on the satellite. Base stations located on different satellites may be connected to the same core network. One satellite may have one or more base stations. In the non-terrestrial network of FIG. 2B, an ISL between satellites may not be established, and in the non-terrestrial network of FIG. 2C, an ISL between satellites may be established.

Meanwhile, the entities (e.g. satellite, base station, UE, communication node, gateway, and the like) constituting the non-terrestrial network shown in FIGS. 1A, 1B, 2A, 2B, and/or 2C may be configured as follows. In the present disclosure, the entity may be referred to as a communication node.

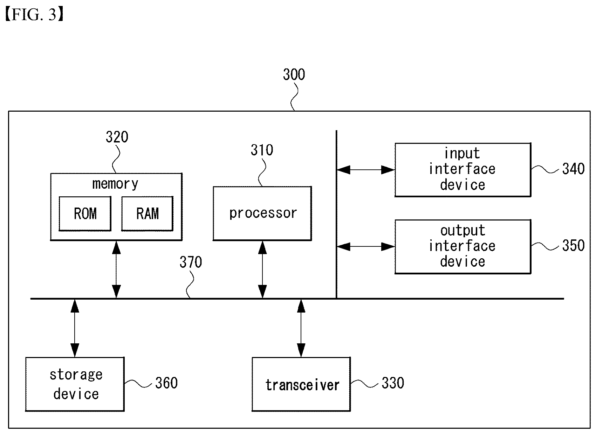

FIG. 3 is a block diagram illustrating exemplary embodiments of a communication node constituting a non-terrestrial network.

As shown in FIG. 3, a communication node 300 may include at least one processor 310, a memory 320, and a transceiver 330 connected to a network to perform communication. In addition, the communication node 300 may further include an input interface device 340, an output interface device 350, a storage device 360, and the like. The components included in the communication node 300 may be connected by a bus 370 to communicate with each other.

However, each component included in the communication node 300 may be connected to the processor 310 through a separate interface or a separate bus instead of the common bus 370. For example, the processor 310 may be connected to at least one of the memory 320, the transceiver 330, the input interface device 340, the output interface device 350, and the storage device 360 through a dedicated interface.

The processor 310 may execute at least one instruction stored in at least one of the memory 320 and the storage device 360. The processor 310 may refer to a central processing unit (CPU), a graphics processing unit (GPU), or a dedicated processor on which the methods according to the exemplary embodiments of the present disclosure are performed. Each of the memory 320 and the storage device 360 may be configured as at least one of a volatile storage medium and a nonvolatile storage medium. For example, the memory 320 may be configured with at least one of a read only memory (ROM) and a random access memory (RAM).

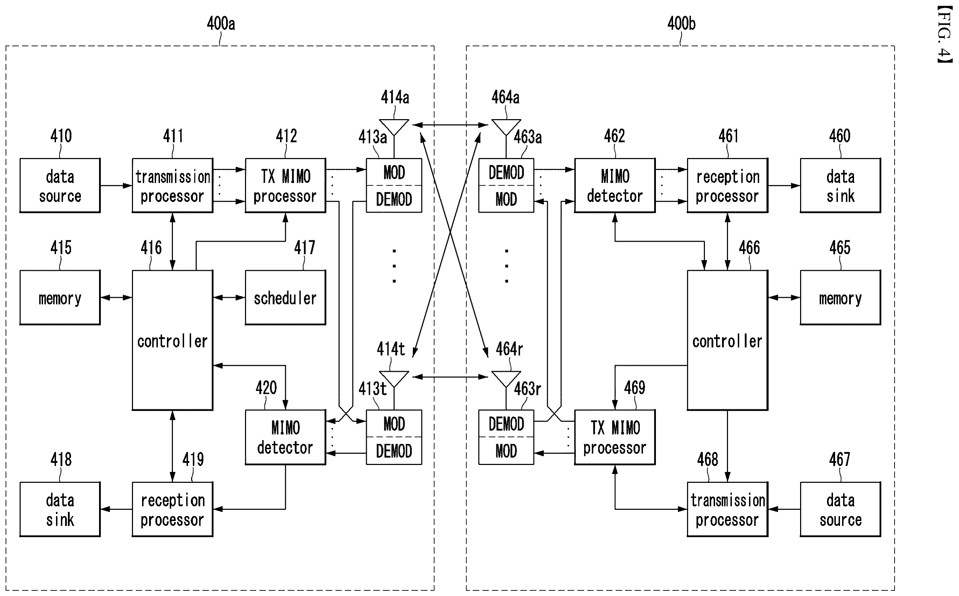

Meanwhile, communication nodes that perform communications in the communication network (e.g. non-terrestrial network) may be configured as follows. A communication node shown in FIG. 4 may be a specific exemplary embodiment of the communication node shown in FIG. 3.

FIG. 4 is a block diagram illustrating exemplary embodiments of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g. data unit) from a data source 410. The transmission processor 411 may receive control information from a controller 416. The control information may include at least one of system information, RRC configuration information (e.g. information configured by RRC signaling), MAC control information (e.g. MAC CE), or PHY control information (e.g. DCI, SCI).

The transmission processor 411 may generate data symbol(s) by performing processing operations (e.g. encoding operation, symbol mapping operation, etc.) on the data. The transmission processor 411 may generate control symbol(s) by performing processing operations (e.g. encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g. precoding operations) on the data symbol(s), control symbol(s), and/or synchronization/reference symbol(s). An output (e.g. symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g. de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g. data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g. precoding operations) on the data symbol(s), control symbol(s), and/or reference symbol(s). An output (e.g. symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g. de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

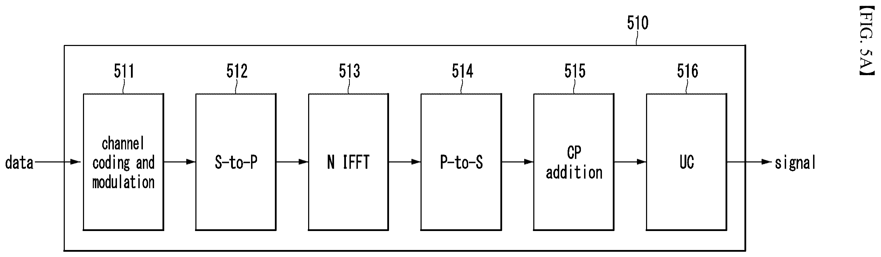

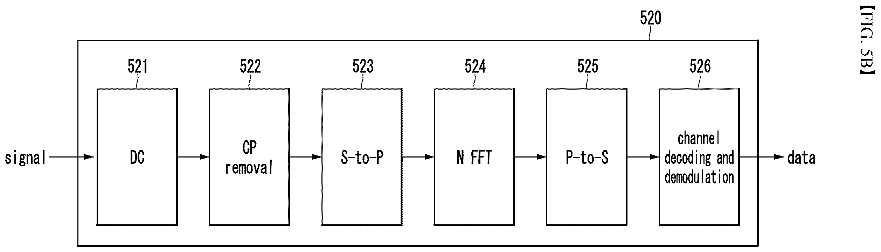

FIG. 5A is a block diagram illustrating exemplary embodiments of a transmission path, and FIG. 5B is a block diagram illustrating exemplary embodiments of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g. components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, NTN reference scenarios may be defined as shown in Table 1 below.

[Table 1]

|  | NTN shown in FIG. 1 | NTN shown in FIG. 2 |
|---|---|---|
| GEO | Scenario A | Scenario B |
| LEO (steerable beams) | Scenario C1 | Scenario D1 |
| LEO (beams moving with satellite) | Scenario C2 | Scenario D2 |

When the satellite 110 in the NTN shown in FIG. 1A and/or FIG. 1B is a GEO satellite (e.g. a GEO satellite that supports a transparent function), this may be referred to as 'scenario A'. When the satellites 211 and 212 in the NTN shown in FIG. 2A, FIG. 2B, and/or FIG. 2C are GEO satellites (e.g. GEOs that support a regenerative function), this may be referred to as 'scenario B'.

When the satellite 110 in the NTN shown in FIG. 1A and/or FIG. 1B is an LEO satellite with steerable beams, this may be referred to as 'scenario C1'. When the satellite 110 in the NTN shown in FIG. 1A and/or FIG. 1B is an LEO satellite having beams moving with the satellite, this may be referred to as 'scenario C2'. When the satellites 211 and 212 in the NTN shown in FIG. 2A, FIG. 2B, and/or FIG. 2C are LEO satellites with steerable beams, this may be referred to as 'scenario D1'. When the satellites 211 and 212 in the NTN shown in FIG. 2A, FIG. 2B, and/or FIG. 2C are LEO satellites having beams moving with the satellites, this may be referred to as 'scenario D2'.

Parameters for the NTN reference scenarios defined in Table 1 may be defined as shown in Table 2 below.

[Table 2]

|  | Scenarios A and B | Scenarios C and D |
|---|---|---|
| Altitude | 35,786 km | 600 km<br>1,200 km |
| Spectrum (service link) | < 6 GHz (e.g. 2 GHz)<br>> 6 GHz (e.g. DL 20 GHz, UL 30 GHz) | |
| Maximum channel bandwidth capability (service link) | 30 MHz for band <6 GHz<br>1 GHz for band >6 GHz | |
| Maximum distance between satellite and communication node (e.g. UE) at the minimum elevation angle | 40,581 km | 1,932 km (altitude of 600 km)<br>3,131 km (altitude of 1,200 km) |
| Maximum round trip delay (RTD) (only propagation delay) | Scenario A: 541.46 ms(service and feeder links)<br><br>Scenario B: 270.73 ms (only service link) | Scenario C: (transparent payload: service and feeder links)<br><br>-5.77 ms (altitude of 60 0km)<br>-41.77 ms (altitude of 1,200 km) |
|  |  | Scenario D: (regenerative payload: only service link)<br>-12.89 ms (altitude of 600 km) |

(continued)

|  | Scenarios A and B | Scenarios C and D |
|---|---|---|
|  |  | -20.89 ms (altitude of 1,200 km) |
| Maximum differential delay within a cell | 10.3 ms | 3.12 ms (altitude of 600 km) 3.18 ms (altitude of 1,200 km) |
| Service link | NR defined in 3GPP | |
| Feeder link | Radio interfaces defined in 3GPP or non-3GPP | |

In addition, in the scenarios defined in Table 1, delay constraints may be defined as shown in Table 3 below.

[Table 3]

|  | Scenario A | Scenario B | Scenario C1-2 | Scenario D1-2 |
|---|---|---|---|---|
| Satellite altitude | 35,786 km | | 600 km | |
| Maximum RTD in a radio interface between base station and UE | 541.75 ms (worst case) | 270.57 ms | 28.41 ms | 12.88 ms |
| Minimum RTD in a radio interface between base station and UE | 477.14 ms | 238.57 ms | 8 ms | 4 ms |

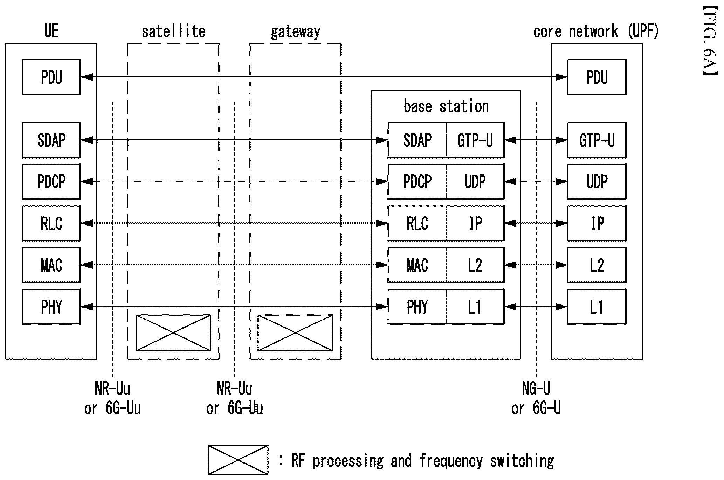

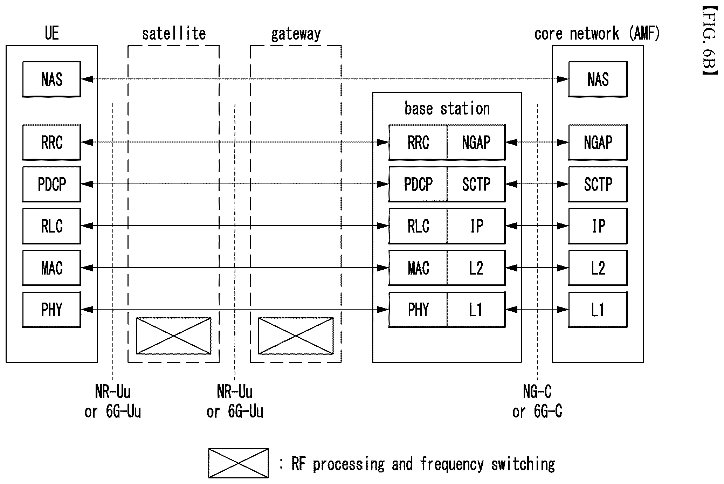

FIG. 6A is a conceptual diagram illustrating exemplary embodiments of a protocol stack of a user plane in a transparent payload-based non-terrestrial network, and FIG. 6B is a conceptual diagram illustrating exemplary embodiments of a protocol stack of a control plane in a transparent payload-based non-terrestrial network.

As shown in FIGS. 6A and 6B, user data may be transmitted and received between a UE and a core network (e.g. UPF), and control data (e.g. control information) may be transmitted and received between the UE and the core network (e.g. AMF). Each of the user data the and control data may be transmitted and received through a satellite and/or gateway. The protocol stack of the user plane shown in FIG. 6A may be applied identically or similarly to a 6G communication network. The protocol stack of the control plane shown in FIG. 6B may be applied identically or similarly to a 6G communication network.

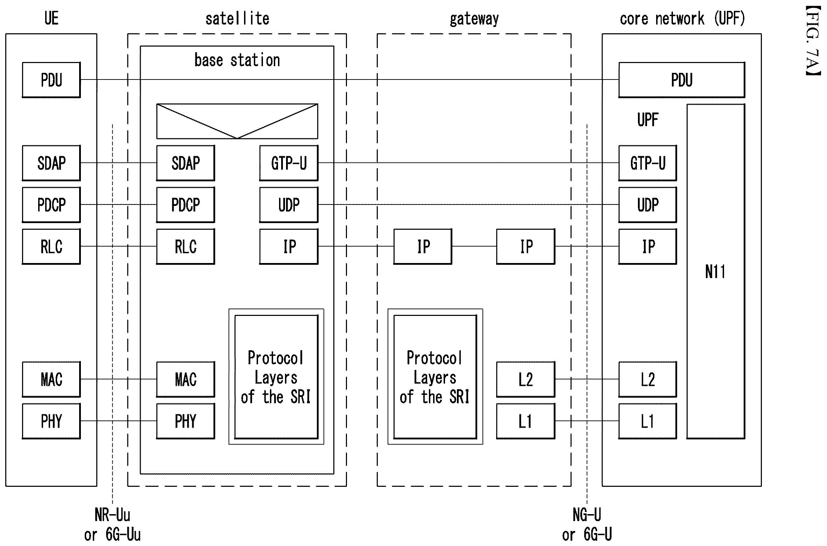

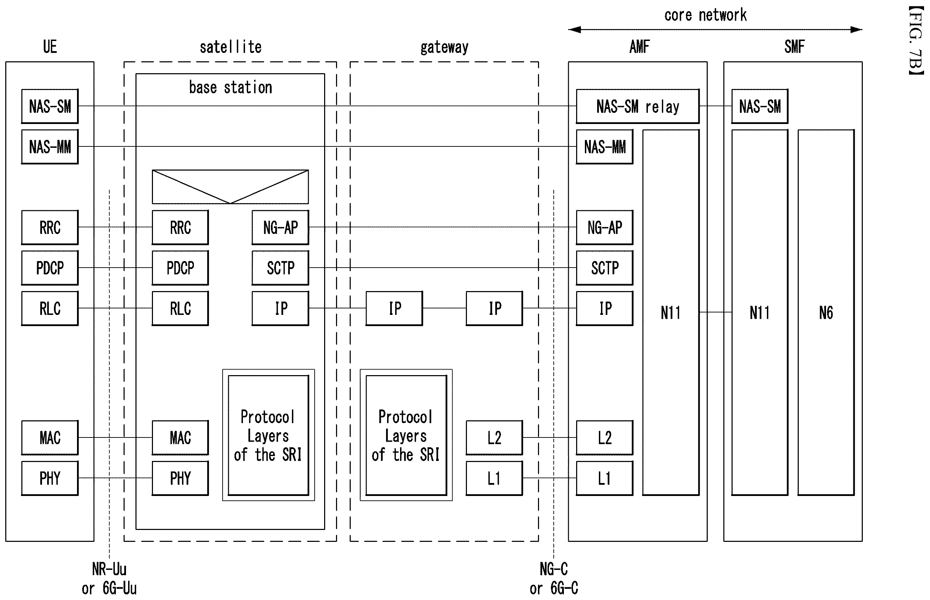

FIG. 7A is a conceptual diagram illustrating exemplary embodiments of a protocol stack of a user plane in a regenerative payload-based non-terrestrial network, and FIG. 7B is a conceptual diagram illustrating exemplary embodiments of a protocol stack of a control plane in a regenerative payload-based non-terrestrial network.

As shown in FIGS. 7A and 7B, each of user data and control data (e.g. control information) may be transmitted and received through an interface between a UE and a satellite (e.g. base station). The user data may refer to a user protocol data unit (PDU). A protocol stack of a satellite radio interface (SRI) may be used to transmit and receive the user data and/or control data between the satellite and a gateway. The user data may be transmitted and received through a general packet radio service (GPRS) tunneling protocol (GTP)-U tunnel between the satellite and a core network.

Meanwhile, in a non-terrestrial network, a base station may transmit system information (e.g. SIB19) including satellite assistance information for NTN access. A UE may receive the system information (e.g. SIB19) from the base station, identify the satellite assistance information included in the system information, and perform communication (e.g. non-terrestrial communication) based on the satellite assistance information. The SIB19 may include information element(s) defined in Table 4 below.

[Table 4]

```
SIB19-r17 ::= SEQUENCE {
      ntn-Config-r17                        NTN-Config-r17
      t-Service-r17                         INTEGER(0..549755813887)
      referenceLocation-r17                 ReferenceLocation-r17
```

```
    distanceThresh-r17                      INTEGER(0..65525)
    ntn-NeighCellConfigList-r17             NTN-NeighCellConfigList-r17
    lateNonCriticalExtension                OCTET STRING

    ...,
    [[
    ntn-NeighCellConfigListExt-v1720        NTN-NeighCellConfigList-r17
    ]]
}
NTN-NeighCellConfigList-r17 ::=           SEQUENCE (SIZE(1..maxCellNTN-r17))
OF NTN-NeighCellConfig-r17
        NTN-NeighCellConfig-r17 ::=             SEQUENCE {
        ntn-Config-r17                          NTN-Config-r17
        carrierFreq-r17                         ARFCN-ValueNR
        physCellId-r17                          PhysCellId
}
```

*NTN-Config* defined in Table 4 may include information element(s) defined in Table 5 below.

[Table 5]

```
NTN-Config-r17 ::=                    SEQUENCE {
    epochTime-r17                     EpochTime-r17
    ntn-UlSyncValidityDuration-r17 ENUMERATED{ s5, s10, s15, s20, s25, s30, s35,
s40, s45, s50, s55, s60, s120, s180, s240, s900}
    cellSpecificKoffset-r17          INTEGER(1..1023)
    kmac-r17                         INTEGER(1..512)
    ta-Info-r17                      TA-Info-r17
    ntn-PolarizationDL-r17           ENUMERATED {rhcp,lhcp,linear}
    ntn-PolarizationUL-r17           ENUMERATED {rhcp,lhcp,linear}
    ephemerisInfo-r17                EphemerisInfo-r17
    ta-Report-r17                    ENUMERATED {enabled}

    ...
}
EpochTime-r17 ::=                    SEQUENCE {
    sfn-r17                          INTEGER(0..1023),
    subFrameNR-r17                   INTEGER(0..9)
```

```
}
TA-Info-r17 ::=                    SEQUENCE  {
    ta-Common-r17                      INTEGER(0..66485757),
    ta-CommonDrift-r17                 INTEGER(-257303..257303)
    ta-CommonDriftVariant-r17          INTEGER(0..28949)
}
```

*EphemerisInfo* defined in Table 5 may include information element(s) defined in Table 6 below.

[Table 6]

```
EphemerisInfo-r17 ::=          CHOICE {
    positionVelocity-r17           PositionVelocity-r17,
    orbital-r17                    Orbital-r17
}
PositionVelocity-r17 ::=       SEQUENCE {
    positionX-r17                  PositionStateVector-r17,
    positionY-r17                  PositionStateVector-r17,
    positionZ-r17                  PositionStateVector-r17,
    velocityVX-r17                 VelocityStateVector-r17,
    velocityVY-r17                 VelocityStateVector-r17,
    velocityVZ-r17                 VelocityStateVector-r17
}
Orbital-r17 ::=                SEQUENCE {
    semiMajorAxis-r17              INTEGER (0..8589934591),
    eccentricity-r17               INTEGER (0..1048575),
    periapsis-r17                  INTEGER (0..268435455),
    longitude-r17                  INTEGER (0..268435455),
    inclination-r17                INTEGER (-67108864..67108863),
    meanAnomaly-r17                INTEGER (0..268435455)
}
PositionStateVector-r17 ::= INTEGER (-33554432..33554431)
VelocityStateVector-r17 ::= INTEGER (-131072..131071)
```

A terminal may repeatedly transmit a single transport block to a base station. When the terminal repeatedly transmits a single transport block, up to two timing advance (TA) adjustment procedures may occur based on an LEO satellite located at an altitude of 1200 km. In a non-terrestrial network environment, since the satellite moves at a high speed, a propagation delay time appearing in uplink may vary rapidly. Since the propagation delay time may rapidly vary in the non-terrestrial network environment, a timing at which the terminal can perform a TA adjustment procedure may occur.

In a terrestrial network environment, a base station may transmit a new TA to a terminal through a MAC CE. In a non-terrestrial network environment, the base station may have difficulty performing fast and precise TA control due to various reasons. The various reasons may include the following. The terminal may not notify the base station of a UE-specific TA value set by the terminal. Due to the high speed movement of the satellite, the base station may need to control the TA more frequently than in a terrestrial network environment, which may increase signaling overhead. A delay time between a time at which the base station measures a time offset of the terminal and a time at which the base station transmits TA control signaling to the terminal may be greater than that in the terrestrial network environment. In the non-terrestrial network environment, a line of sight (LOS) may be secured, so a path of wireless signals may not rapidly change. The base station may continuously update information on the movement of the satellite, common TA information, and a service link length (which may also be obtained by the terminal through a Global Navigation Satellite System (GNSS)), and therefore the base station may have a low frequency of TA updates.

The base station may have difficulty performing fast and precise TA control. Due to the difficulty in TA control, the base station may perform a less inefficient TA adjustment procedure. When the base station performs a less inefficient TA adjustment procedure, an actual time domain window (TDW) may be generated too small or too large. Due to the small or large actual TDW, a gain of bundling reference signals may decrease. The present disclosure proposes a method in which the terminal may actively perform a TA adjustment procedure to improve the gain of bundling reference signals. The method of actively performing a TA adjustment procedure may be as follows.

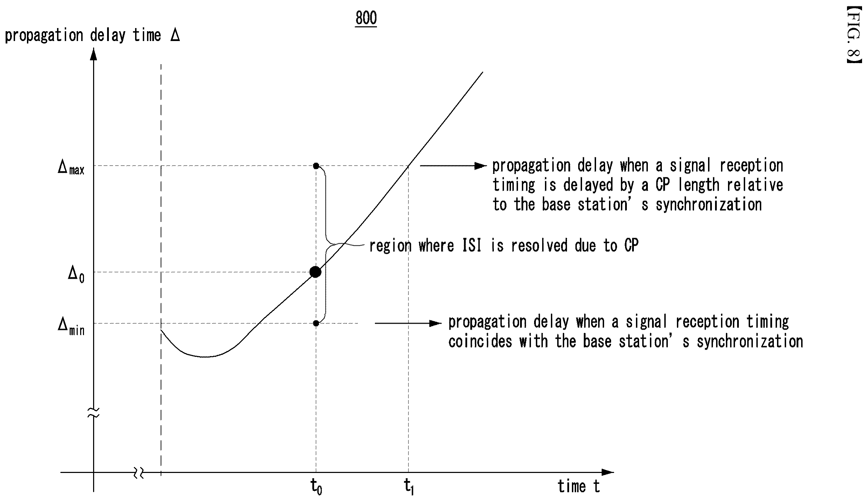

FIG. 8 is a conceptual diagram illustrating exemplary embodiments of an active TA adjustment method.

As shown in FIG. 8, in an NR NTN environment, a TA may be as in Equation 1.

[Equation 1]

$$T_{TA} = \left(N_{TA} + N_{TA,offset}\right)T_c + \left(T_{TA,common} + T_{TA,UE-specific}\right)$$

$T_{TA}$ may indicate timing information. In other words, $T_{TA}$ may indicate a value for a timing advance (TA). $T_{TA,common}$ may be referred to as a common TA. $T_{TA,common}$ may be a value commonly applied to all terminals belonging to a cell and/or beam served by a satellite. $T_{TA,common}$ may be a value not considering a location of each terminal. $T_{TA,common}$ may be transmitted from the base station to the terminals through a system information block (SIB). That is, $T_{TA,common}$ may be broadcasted. $T_{TA,UE-specific}$ may indicate a delay of a service link. In other words, $T_{TA,UE-specific}$ may refer to a value determined by the terminal calculating the length of its own service link. $T_{TA,UE-specific}$ may indicate a TA value estimated by the terminal. $T_{TA,UE-specific}$ may be referred to as a UE-specific TA. $T_{TA,UE-specific}$ may refer to a round trip delay (RTD) between the terminal and the satellite. In other words, $T_{TA,UE-specific}$ may indicate a delay value between the terminal and the satellite. Meanwhile, the terminal may perform a closed-loop timing control procedure according to a TA command message transmitted by the base station. The terminal may not transmit $T_{TA,UE-specific}$ to the base station. The terminal may receive ephemeris information of the serving satellite through a SIB to obtain a suitable $T_{TA,UE-specific}$. The terminal may use its GNSS-based location information to obtain a suitable $T_{TA,UE-specific}$.

$N_{TA}$ may perform the same role as $N_{TA}$ in a terrestrial network. For TA information in the NTN, $N_{TA,offset}$ may be additionally defined. $N_{TA,offset}$ may refer to a TA parameter applied in a UE-common manner, and $T_c$ may refer to a basic time unit constant mainly used in the NR physical layer. The base station may transmit parameters required to calculate $N_{TA} + N_{TA,offset}$ through a MAC CE.

A propagation delay time may occur due to a service link and a feeder link. The propagation delay time may be represented as $\Delta$. The propagation delay time may refer to a delay time according to a distance between the terminal and the base station. The propagation delay time may vary depending on the location and movement of the satellite. For example, a terminal having a delay time of $\Delta_a$ at a time $t_a$ may be assumed. Interference between signals may be resolved by a cyclic prefix (CP) of an OFDM symbol, which may address inter-symbol interference (ISI) between adjacent symbols. A tolerable delay time (and delay spread) duration for ISI may be defined as $[\Delta_{min}, \Delta_{max}]$. The terminal may receive a signal through an uplink within a CP duration until a time $t_1$. The terminal may receive normal data without ISI until the time $t_1$. $\Delta_{max}$ may indicate a propagation delay time when a signal reception timing is delayed by the length of CP from the base station's synchronization reference. $\Delta_0$ may indicate a propagation delay time when the signal reception timing is not delayed. $\Delta_{min}$ may indicate a propagation delay time when a signal reception timing matches the base station's synchronization.

A timing at which the base station receives an uplink signal transmitted by the terminal may be represented as $t_{UE}$. A reference timing at which the base station receives the uplink signal may be represented as $t_{Ref}$. A difference between $t_{UE}$ and $t_{Ref}$ may be expressed as $t_{Diff} = t_{UE} - t_{Ref}$. In other words, $t_{Diff}$ may indicate a difference between the timing at which the base station receives the uplink signal transmitted by the terminal and the reference timing at which the base station receives the uplink signal. When $t_{Diff}$ has a value of $[0, T_{CP}]$, the base station may receive the signal without inter-symbol interference. $T_{CP}$ may indicate a length of a minimum cyclic prefix (CP) in a subcarrier spacing (SCS). A typical CP may be defined as $T_{CP} = \frac{1}{SCS}\frac{9}{128}[\sec]$.

In the non-terrestrial network, when the condition $t_{Diff} \in [0, T_{CP}]$ is satisfied, the base station may receive the signal without inter-symbol interference. Considering stability and performance of signal reception in an actual communication environment, the base station may perform a TA control procedure in order to maintain the condition $t_{Diff} \in [T_0, T_1]$. $T_0$ and $T_1$ may represent real values satisfying $0 \leq T_0 \leq T_1 \leq T_{CP}$. In other words, in the non-terrestrial network environment, $t_{Diff}$ of a signal for each slot and/or symbol may change over time. The base station may actively perform a TA adjustment procedure to continuously satisfy $t_{Diff} \in [T_0, T_1]$.

A method for performing a TA adjustment procedure may include at least one of: a method for determining a TA adjustment timing, a method for determining a TA adjustment value, a method for reporting the TA adjustment timing, or a method for defining a new adjustment parameter used for a TA adjustment rule. The method for performing the TA adjustment procedure may include a method in which the base station instructs the terminal to adjust a TA, and may include a method in which the terminal instructs the base station to adjust a TA. The present disclosure allows the terminal to maintain the condition $T_0 \leq t_{Diff} \leq T_1$ even in the absence of a TA control procedure (instruction) by the base station.

A transmission timing may include information required for making the difference $t_{Diff} = t_{UE} - t_{Ref}$ between the reception timing of the uplink signal at the base station and the reference uplink timing at the base station for the uplink signal to satisfy $T_0 \leq t_{Diff} \leq T_1$. A difference between the reception timing of the uplink signal and the reference uplink timing at a time when the TA adjustment is performed by the base station may be represented as $t_{Diff-init}$. A difference between a reception timing of an uplink signal and a reference uplink timing after the time when the TA adjustment is performed by the base station may be represented as $t_{Diff}$.

The base station may transmit an adjustment parameter for TA control to the terminal. The terminal may receive the adjustment parameter transmitted by the base station. The adjustment parameter may include $T_0$ and $T_1$, and $T_0$ and $T_1$ may be parameters to be delivered from the base station to the terminal.

$T_{TA,common} + T_{TA,UE-specific}$ may vary over time due to movement of the satellite, a location of the terminal, or movement of the terminal. A variation of $T_{TA,common}$ over time may be a value that the terminal may recognize. A variation of $T_{TA,UE-specific}$ over time may be a value that the terminal may recognize. The present disclosure proposes a method in which the terminal actively performs a TA adjustment procedure.

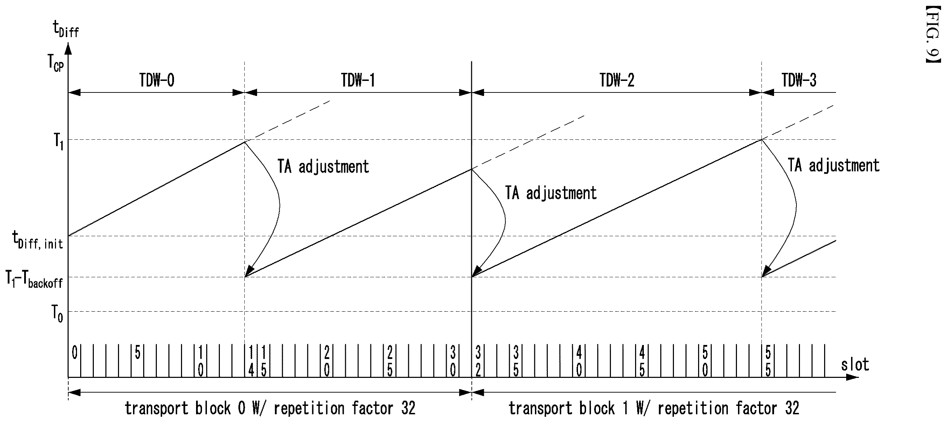

FIG. 9 is a conceptual diagram illustrating exemplary embodiments of an active TA adjustment method.

As shown in FIG. 9, a method for determining a TA adjustment timing and a method for determining a TA adjustment value may be as follows. In an exemplary embodiment of the present disclosure, the terminal may transmit bundled reference signals to the base station. When a condition 1 is satisfied in a time duration during which the terminal transmits the bundled reference signals, the terminal may not perform a TA adjustment procedure. The condition 1 may indicate $T_0 \leq t_{Diff} \leq T_1$. The condition 1 may include a condition modified similarly without being limited to $T_0 \leq t_{Diff} \leq T_1$.

When the condition 1 is not satisfied in the time duration during which the terminal transmits the bundled reference signals, the terminal may perform a TA adjustment procedure. When the terminal performs a TA adjustment procedure, a corresponding slot may become a start time of a new time domain window.

A time at which the condition 1 is evaluated may indicate a start time of each slot in which a physical uplink shared channel (PUSCH) is transmitted. The time at which the condition 1 is evaluated may indicate a start time of the first demodulation reference signal (DMRS) symbol for each slot in which the PUSCH is transmitted. The time at which the condition 1 is evaluated may correspond to a midpoint symbol time for each slot in which the PUSCH is transmitted. The time at which the condition 1 is evaluated is not limited and may be configured arbitrarily by the terminal.

When the condition 1 is not satisfied in the first slot in which repeated transmissions for a signal start, the terminal may perform a TA adjustment procedure. Since the first slot of the repeated transmissions for the signal is a boundary of a time domain window, the terminal may not further divide the time domain window even when the TA adjustment procedure is performed.

When the condition 1 is satisfied in the first slot in which the repeated transmissions for the signal start, the terminal may or may not perform a TA adjustment procedure. Since the first slot of the repeated transmissions for the signal is a boundary of a time domain window, the terminal may not further divide the time domain window even when the TA adjustment procedure is performed.

The base station may instruct the terminal to perform a TA update. When the base station instructs the terminal to perform a TA update procedure, the terminal may reflect a TA adjustment value indicated by the base station at a time when a new time domain window starts after terminating the current time domain window. The start of the new time domain window by the terminal, after terminating the current time-domain window and applying the TA adjustment value, may be identical to restarting from a slot 0. The base station may calculate a difference between a number of a downlink slot in which the base station instructed the terminal to perform the TA update and a number of an uplink slot in which the TA adjustment value is reflected, and may determine a difference between a time at which the base station gave the instruction and a time at which the terminal reflects the TA adjustment value. The terminal may perform the TA adjustment procedure in consideration of a change amount of $T_{TA,common}$ and a change amount of $T_{TA,UE-specific}$ that occur during a time duration corresponding to the difference between the time at which the base station gave the instruction and the time at which the terminal applies the TA adjustment value. The terminal may not consider a change amount of a TA that occurs during the time duration corresponding to the difference between the time at which the base station gave the instruction and the time at which the terminal applies the TA adjustment value.

The terminal may determine a TA adjustment timing. The TA adjustment timing may include a time at which the condition 1 is evaluated to determine whether to perform the TA adjustment procedure. The TA adjustment timing may be referred to as a start time of the TA adjustment procedure. An example of a method of determining the TA adjustment timing may be as follows. For example, a slot 14 and a slot 55 of FIG. 9 may indicate points at which the terminal starts a new time domain window. In other words, the terminal may start a new time domain window from a slot (slot 14 and slot 55) that does not satisfy the condition 1.

For example, a slot 32 satisfies the condition 1 but may not be bundled with the previous slot because it is a start slot of a new transport block. The terminal may perform the TA adjustment procedure.

After performing the TA adjustment procedure, the terminal may perform a configuration procedure of $t_{Diff}$. The terminal may perform the TA adjustment with a value equal to or similar to a timing $t_{Diff,init}$ indicated by the base station. After the TA adjustment, the terminal may adjust $t_{Diff}$ to have a value of $\dfrac{T_1 + T_2}{2}$. When $t_{Diff} > T_1$, the terminal may adjust the TA so that $t_{Diff}$ becomes equal to or similar to $T_1 - T_{backoff}$. When $t_{Diff} < T_0$, the terminal may adjust the TA so that $t_{Diff}$ becomes equal to or similar to $T_0 + T_{backoff}$. For example, FIG. 9 may assume that $t_{Diff} > T_1$ occurred.

A method of reporting the TA adjustment timing may be as follows. The base station may receive information on a timing at which the terminal performs the TA adjustment procedure. The base station may determine a boundary of a time domain window. The base station may perform a joint channel estimation procedure. The base station may determine the boundary of the time domain window before performing the joint channel estimation procedure. The base station may not perform a reporting procedure through higher layer signaling before determining the boundary of the time domain window.

The present disclosure enables the terminal to report the boundary of the time domain window that occurs when the terminal actively performs the TA adjustment procedure, by hopping a DMRS port number. For example, the terminal may report to the base station a boundary between TDW-0 and TDW-1 (or the first slot of TDW-1). To report to the base station the boundary between TDW-0 and TDW-1 (or the first slot of TDW-1), the terminal may use a DMRS port 0 in TDW-0. To report to the base station the boundary between TDW-0 and TDW-1 (or the first slot of TDW-1), the terminal may use a DMRS port 1 in TDW-1. When the boundary between TDW-1 and TDW-2 may be a boundary of a transport block, it may be information known to both the terminal and the base station. Accordingly, the terminal may not consider DMRS port number hopping for the boundary between TDW-1 and TDW-2.

A method of defining adjustment parameters used for the TA adjustment rule may be as follows. The adjustment parameters may include at least one of *UE-Active_TA_adjustment_Enable*, $T_0$, $T_1$, $T_{backoff}$, or a DMRS port number hopping rule.

*UE-Active_TA_adjustment_Enable* may refer to a parameter that determines whether to apply the terminal's active TA adjustment procedure when bundled reference signals are configured. *UE-Active_TA_adjustment_Enable* may be transmitted by the base station to the terminal through DCI or RRC signaling.

$T_0$ and $T_1$ may be variables used in the condition 1. The following may be a reorganization of the condition 1. The condition 1 may be expressed as $t_{Diff,init} - t_{LowerBound} \le t_{Diff} \le t_{Diff,init} + t_{UpperBound}$. $t_{Diff,init}$ may indicate an uplink transmission timing determined through a TA update of the base station. $t_{LowerBound}$ may indicate an earlier time by an arbitrary value. $t_{UpperBound}$ may indicate a later time by an arbitrary value. Time durations for $t_{LowerBound}$ and $t_{UpperBound}$ may be the same. In other words, $t_{Diff} - t_{Diff,init}$ may be expressed as $-t_{LowerBound} \le t_{Diff} - t_{Diff,init} \le t_{UpperBound}$. When values of $t_{LowerBound}$ and $t_{UpperBound}$ are given, the base station may know time points corresponding to $T_0$ and $T_1$.

The value of $t_{LowerBound}$ and the value of $t_{UpperBound}$ may be regarded as a single parameter and may be the same value. The value of $t_{LowerBound}$ and the value of $t_{UpperBound}$ may be transmitted from the base station to the terminal through RRC signaling.

$T_{backoff}$ may indicate one or more fixed values defined in advance. $T_{backoff}$ may be transmitted from the base station to the terminal through RRC signaling.

The DMRS port number hopping rule may determine a rule for changing the DMRS port number. The base station may configure a predefined hopping rule. The base station may transmit information to the terminal on which port to hop to.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a user equipment (UE), comprising:

   receiving a downlink (DL) signal from a base station;
   obtaining an adjustment parameter for timing advance (TA) control, which is included in the downlink signal;
   determining a start time of a TA adjustment procedure by determining whether a difference value obtained using TA information of the UE is within a range of the adjustment parameter;
   performing the TA adjustment procedure at the start time of the TA adjustment procedure; and
   transmitting bundled reference signals to the base station using the adjusted TA.

2. The method according to claim 1, wherein the start time of the TA adjustment procedure includes at least one of: a start time of each slot in which a Physical Uplink Shared Channel (PUSCH) is transmitted, a first Demodulation Reference Signal (DMRS) symbol of each slot, or a middle symbol of each slot.

3. The method according to claim 1, wherein the determining of the start time of the TA adjustment procedure by determining whether the difference value obtained using the TA information of the UE is within the range of the adjustment parameter comprises:

   determining whether a difference between a reception timing of an uplink signal at the base station and a reference timing of the uplink signal at the base station is within the range of the adjustment parameter set by the base station, based on the TA information; and
   determining the start time of the TA adjustment procedure based on whether the difference is within the range.

4. The method according to claim 1, wherein the performing of the TA adjustment procedure at the start time of the TA adjustment procedure comprises: adjusting the difference value so that a difference value between a reception timing of an uplink signal at the base station and a reference timing of the uplink signal at the base station is included within the range of the adjustment parameter at the start time of the TA adjustment procedure.

5. The method according to claim 1, further comprising: transmitting information on the start time of the TA adjustment procedure for the TA adjustment procedure to the base station.

6. The method according to claim 1, wherein the adjustment parameter includes at least one of: a parameter for determining whether the UE performs the TA adjustment procedure, $T_0$, which is a value set in advance by the base station, $T_1$, which is a value set in advance by the base station, or information on a port to which the UE is to hop.

7. The method according to claim 1, wherein the adjustment parameter includes a parameter that determines whether to initiate the TA adjustment procedure when the bundled reference signals are configured.

8. The method according to claim 1, wherein the downlink signal is transmitted through Downlink Control Information (DCI) or Radio Resource Control (RRC) signaling.

9. A method of a base station, comprising:

transmitting a downlink (DL) signal including an adjustment parameter set by the base station for timing advance (TA) control to a user equipment (UE); and
receiving bundled reference signals from the UE using a TA adjusted within a range of the adjustment parameter at a start time of a TA adjustment procedure, the start time being determined by determining whether a difference value obtained using TA information of the UE is within the range of the adjustment parameter.

10. The method according to claim 9, further comprising: receiving information on the start time of the TA adjustment procedure for the TA adjustment procedure from the UE.

11. The method according to claim 9, wherein the adjustment parameter includes a parameter that determines whether to initiate the TA adjustment procedure when the bundled reference signals are configured.

12. The method according to claim 9, wherein the downlink signal is transmitted through Downlink Control Information (DCI) or Radio Resource Control (RRC) signaling.

13. A user equipment (UE), comprising at least one processor, wherein the at least one processor causes the UE to perform:

receiving a downlink (DL) signal from a base station;
obtaining an adjustment parameter for timing advance (TA) control, which is included in the downlink signal;
determining a start time of a TA adjustment procedure by determining whether a difference value obtained using TA information of the UE is within a range of the adjustment parameter;
performing the TA adjustment procedure at the start time of the TA adjustment procedure; and
transmitting bundled reference signals to the base station using the adjusted TA.

14. The UE according to claim 13, wherein the start time of the TA adjustment procedure includes at least one of: a start time of each slot in which a Physical Uplink Shared Channel (PUSCH) is transmitted, a first Demodulation Reference Signal (DMRS) symbol of each slot, or a middle symbol of each slot.

15. The UE according to claim 13, wherein in the determining of the start time of the TA adjustment procedure by determining whether the difference value obtained using the TA information of the UE is within the range of the adjustment parameter, the at least one processor further causes the UE to perform:

determining whether a difference between a reception timing of an uplink signal at the base station and a reference timing of the uplink signal at the base station is within the range of the adjustment parameter set by the base station, based on the TA information; and
determining the start time of the TA adjustment procedure based on whether the difference is within the range.

16. The UE according to claim 13, wherein in the performing of the TA adjustment procedure at the start time of the TA adjustment procedure, the at least one processor further causes the UE to perform: adjusting the difference value so that a difference value between a reception timing of an uplink signal at the base station and a reference timing of the uplink signal at the base station is included within the range of the adjustment parameter at the start time of the TA adjustment procedure.

17. The UE according to claim 13, wherein the at least one processor further causes the UE to perform: transmitting information on the start time of the TA adjustment procedure for the TA adjustment procedure to the base station.

18. The UE according to claim 13, wherein the adjustment parameter includes at least one of: a parameter for determining whether the UE performs the TA adjustment procedure, $T_0$, which is a value set in advance by the base station, $T_1$, which is a value set in advance by the base station, or information on a port to which the UE is to hop.

19. The UE according to claim 13, wherein the adjustment parameter includes a parameter that determines whether to initiate the TA adjustment procedure when the bundled reference signals are configured.

20. The UE according to claim 13, wherein the downlink signal is transmitted through Downlink Control Information (DCI) or Radio Resource Control (RRC) signaling.

【FIG. 1A】

【FIG. 1B】

【FIG. 2A】

【FIG. 2B】

【FIG. 2C】

【FIG. 3】

【FIG. 4】

【FIG. 5A】

【FIG. 5B】

【FIG. 6A】

【FIG. 6B】

【FIG. 7A】

【FIG. 7B】

[FIG. 8]

EP 4 657 934 A1

800

propagation delay time $\Delta$

$\Delta_{max}$

$\Delta_0$

$\Delta_{min}$

$t_0$    $t_1$    time t

propagation delay when a signal reception timing is delayed by a CP length relative to the base station's synchronization

region where ISI is resolved due to CP

propagation delay when a signal reception timing coincides with the base station's synchronization

【FIG. 9】

## INTERNATIONAL SEARCH REPORT

| International application No. |
|---|
| **PCT/KR2024/004669** |

**A.     CLASSIFICATION OF SUBJECT MATTER**

**H04W 56/00**(2009.01)i; **H04W 72/1268**(2023.01)i; **H04W 72/0446**(2023.01)i; **H04L 5/00**(2006.01)i; **H04W 84/06**(2009.01)i

According to International Patent Classification (IPC) or to both national classification and IPC

**B.      FIELDS SEARCHED**

Minimum documentation searched (classification system followed by classification symbols)

H04W 56/00(2009.01); H04L 5/00(2006.01); H04W 72/04(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TA(timing advance), 조정(adjusting), 파라미터(parameter), 번들링(bundling), UE(user equipment), 기지국(base station)

**C.      DOCUMENTS CONSIDERED TO BE RELEVANT**

| Category* | Citation of document, with indication, where appropriate, of the relevant passages | Relevant to claim No. |
|---|---|---|
| Y | US 2021-0058885 A1 (HUAWEI TECHNOLOGIES CO., LTD.) 25 February 2021 (2021-02-25)<br>See paragraphs [0008], [0063] and [0105]-[0122]; claims 1-3; and figures 1-2. | 1-20 |
| Y | WO 2023-051450 A1 (VIVO MOBILE COMMUNICATION CO., LTD.) 06 April 2023 (2023-04-06)<br>See abstract; page 2, lines 1-4; and claims 1-17. | 1-20 |
| A | KR 10-2022-0168974 A (ELECTRONICS AND TELECOMMUNICATIONS RESEARCH INSTITUTE) 26 December 2022 (2022-12-26)<br>See claims 1-20. | 1-20 |
| A | US 11552700 B2 (MEDIATEK INC.) 10 January 2023 (2023-01-10)<br>See claims 1-12. | 1-20 |
| A | US 2021-0160880 A1 (ZTE CORPORATION) 27 May 2021 (2021-05-27)<br>See paragraphs [0110]-[0322]; and claims 15-20. | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 July 2024** | **29 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/004669**

| Patent document cited in search report | | | Publication date (day/month/year) | Patent family member(s) | | | Publication date (day/month/year) |
|---|---|---|---|---|---|---|---|
| US | 2021-0058885 | A1 | 25 February 2021 | AU | 2019-266797 | A1 | 26 November 2020 |
| | | | | AU | 2019-266797 | B2 | 20 January 2022 |
| | | | | BR | 112020022625 | A2 | 02 February 2021 |
| | | | | CA | 3099321 | A1 | 14 November 2019 |
| | | | | CN | 109451586 | A | 08 March 2019 |
| | | | | CN | 109451586 | B | 07 July 2020 |
| | | | | CN | 110475358 | A | 19 November 2019 |
| | | | | EP | 3783979 | A1 | 24 February 2021 |
| | | | | EP | 3783979 | B1 | 18 October 2023 |
| | | | | JP | 2021-522748 | A | 30 August 2021 |
| | | | | JP | 2022-174080 | A | 22 November 2022 |
| | | | | JP | 7128297 | B2 | 30 August 2022 |
| | | | | JP | 7483806 | B2 | 15 May 2024 |
| | | | | US | 11516760 | B2 | 29 November 2022 |
| | | | | US | 11838885 | B2 | 05 December 2023 |
| | | | | US | 2023-0140450 | A1 | 04 May 2023 |
| | | | | WO | 2019-214730 | A1 | 14 November 2019 |
| WO | 2023-051450 | A1 | 06 April 2023 | CN | 115883041 | A | 31 March 2023 |
| | | | | KR | 10-2024-0071412 | A | 22 May 2024 |
| KR | 10-2022-0168974 | A | 26 December 2022 | KR | 10-2023-0007279 | A | 12 January 2023 |
| | | | | US | 2022-0408387 | A1 | 22 December 2022 |
| US | 11552700 | B2 | 10 January 2023 | CN | 111919503 | A | 10 November 2020 |
| | | | | CN | 111919503 | B | 10 November 2023 |
| | | | | TW | 202042583 | A | 16 November 2020 |
| | | | | TW | I738234 | B | 01 September 2021 |
| | | | | US | 2020-0295824 | A1 | 17 September 2020 |
| | | | | WO | 2020-182006 | A1 | 17 September 2020 |
| US | 2021-0160880 | A1 | 27 May 2021 | CN | 110391881 | A | 29 October 2019 |
| | | | | CN | 110391881 | B | 22 April 2022 |
| | | | | CN | 114826534 | A | 29 July 2022 |
| | | | | EP | 3783977 | A1 | 24 February 2021 |
| | | | | EP | 3783977 | B1 | 19 June 2024 |
| | | | | US | 12022497 | B2 | 25 June 2024 |
| | | | | WO | 2019-201247 | A1 | 24 October 2019 |

Form PCT/ISA/210 (patent family annex) (July 2022)